# EUROPÄISCHE PATENTSCHRIFT

(11) **EP 0 940 623 B1**
(45) Veröffentlichungstag und Bekanntmachung des Hinweises auf die Patenterteilung: **09.07.2003**
(21) Anmeldenummer: 99103434.9
(22) Anmeldetag: 23.02.1999
(51) Int. Cl.: F16P 3/14

(54) **Vorrichtung zum Überwachen eines Schutzbereichs**
Device for monitoring a protected zone
Dispositif de contrôle d'une zone protégée

(30) Priorität: 06.03.1998 DE 19809709
(43) Veröffentlichungstag der Anmeldung: 08.09.1999
(73) Patentinhaber: Sick AG, 79183 Waldkirch, Breisgau (DE)
(72) Erfinder: Geiler, Martin, 77793 Gutach (DE); Dold, Franz, 78120 Furtwagen (DE)
(74) Vertreter: Manitz, Finsterwald & Partner GbR

(56) Entgegenhaltungen:
- DE-U- 29 606 381
- GB-A- 2 099 536

## Beschreibung

Die vorliegende Erfindung betrifft eine Vorrichtung zum Überwachen eines Schutzbereichs mit einer Überwachungseinheit zum Erfassen eines in den Schutzbereich eindringenden Objekts, wobei die Überwachungseinheit zumindest einen Ausgang besitzt, an dem bei Eindringen eines Objekts in den Schutzbereich ein Steuersignal zum Ansteuern einer zu überwachenden Einrichtung, insbesondere ein Schaltsignal zum Abschalten der Einrichtung, erzeugbar ist, und mit zumindest einem Anschluß für einen Schalter, insbesondere für einen Notausschalter, durch den die Einrichtung zusätzlich ansteuerbar, insbesondere abschaltbar ist.

Mit üblichen Vorrichtungen dieser Art werden Schutzbereiche von gefährlichen Maschinen abgesichert. Darunter fallen beispielsweise Preß-, Schneid- und Hobelmaschinen sowie sonstige Maschinen, bei denen innerhalb des Schutzbereichs automatisierte Bewegungsabläufe von Teilen der Maschine vorhanden sind.

Um bei solchen Vorrichtungen zusätzlich zum Abschalten der überwachten Einrichtung durch Erzeugung eines entsprechenden Abschaltsignals durch die Überwachungseinheit auch eine manuelle Abschaltung, beispielsweise über einen Notausschalter zu ermöglichen, werden beispielsweise der Schaltausgang der Überwachungseinheit sowie der Ausgang des Notausschalters einer gemeinsamen Schalteinheit zugeführt, durch die sowohl die von dem Notausschalter kommenden Signale als auch die von dem Schaltausgang der Überwachungseinheit kommenden Signale überprüft werden. Sobald eines der beiden Signale von der Schalteinheit als Schaltsignal erkannt wird, wird an dem Ausgang der Schalteinheit ein entsprechendes Abschaltsignal erzeugt und an die zu überwachende Einrichtung weitergeleitet, so daß diese abgeschaltet wird.

Nachteilig dabei ist, daß die Schalteinheit je nach Anwendungsgebiet bestimmte Sicherheitsanordnungen erfüllen muß und daher üblicherweise einen nicht zu vernachlässigenden Kostenanteil an den Gesamtkosten einer entsprechenden Überwachungsvorrichtung besitzt. Darüber hinaus besteht durch das zusätzliche Zwischenschalten einer Schalteinheit in den Abschaltpfad die Gefahr, daß die einzelnen Elemente falsch miteinander verschaltet werden, wodurch die Funktionsfähigkeit der Vorrichtung nicht gewährleistet wäre. Gerade dies muß jedoch bei den eingangs genannten sicherheitsrelevanten Überwachungsvorrichtungen ausgeschlossen sein.

Da üblicherweise die Schalteinheit in relativ großer Entfernung von der zu überwachenden Einrichtung angeordnet ist, der Notausschalter jedoch nahe an der potentiellen Gefahrenstelle, d. h. im Bereich der zu überwachenden Einrichtung vorgesehen sein muß, besitzt die Verbindungsleitung zwischen Notausschalter und Schalteinheit oftmals eine relativ große Länge. Dies ist nachteilig, da dadurch die Kosten für die Leitung, die den vorgegebenen Sicherheitsanforderungen entsprechen muß, erhöht werden und darüber hinaus die Gefahr einer Beschädigung der Leitung zunimmt.

Aufgabe der Erfindung ist es, eine Vorrichtung der eingangs genannten Art anzugeben, die einfach und kostengünstig herzustellen ist und bei der ein fehlerhaftes Verschalten der einzelnen Komponenten praktisch ausgeschlossen ist.

Ausgehend von einer Vorrichtung der eingangs genannten Art wird diese Aufgabe erfindungsgemäß dadurch gelöst, daß der Anschluß als Eingang der Überwachungseinheit ausgebildet ist und daß durch Betätigen eines an dem Eingang angeschlossenen Schalters an dem Ausgang der Überwachungseinheit das Steuersignal für die zu überwachende Einrichtung erzeugbar ist.

Erfindungsgemäß wird somit auch bei der Betätigung eines an den Eingang der Überwachungseinheit angeschlossenen Schalters, beispielsweise eines Notausschalters, die der Überwachungseinheit eigene Funktionalität, ein entsprechendes Steuersignal zum Ansteuern der zu überwachenden Einrichtung zu erzeugen, genutzt. Auf diese Weise kann auf eine zusätzliche, sichere Schalteinheit zum Überprüfen der Ausgangssignale der Überwachungseinheit sowie des Notausschalters verzichtet werden, da das am Ausgang der Überwachungseinheit anliegende Steuersignal sowohl bei Erfassen eines in den Schutzbereich eindringenden Objekts als auch durch Betätigung des Notausschalters durch denselben Abschnitt der Überwachungseinheit erzeugt wird.

Weiterhin ist bei der erfindungsgemäß ausgebildeten Vorrichtung ein fehlerhaftes Verschalten der einzelnen Komponenten praktisch ausgeschlossen, da die Überwachungseinheit in üblicher Weise angeschlossen wird und der Notausschalter lediglich an einen entsprechend gekennzeichneten Eingang der Überwachungseinheit angeschlossen werden muß.

Da die Überwachungseinheit naturgemäß in unmittelbarer Umgebung der zu überwachenden Einrichtung angeordnet ist und auch der Notausschalter, wie eingangs erwähnt, nahe an dieser Einrichtung vorgesehen sein muß, kann mit einer erfindungsgemäßen Vorrichtung die Verbindungsleitung zwischen Notausschalter und Überwachungseinheit relativ kurz gehalten werden. Somit können zum einen die Kosten für die Überwachungsleitung reduziert und zum anderen die Gefahr einer Beschädigung der Leitung verringert werden.

Wenn in dieser Anmeldung vorwiegend die Begriffe "Notausschalter" und "abschalten" verwendet werden, so ist dies lediglich beispielhaft gemeint. Der Erfindungsgedanke ist jedoch nicht auf diese Ausführungen beschränkt, sondern umfaßt auch die Fälle, bei denen beispielsweise anstelle eines Abschaltsignals ein Steuersignal erzeugt wird, durch das die Einrichtung entsprechend angesteuert werden kann. Beispielsweise kann die Drehzahl einer überwachten Maschine lediglich verringert werden oder sonstige Steuervorgänge, wie das Schließen oder Öffnen einer Tür, durch das Steuersignal ausgelöst werden. Bei dem Notausschalter kann es sich auch um einen kontinuierlich schaltenden Schalter handeln, so daß hier nicht lediglich die Schaltzustände "ein/aus" sondern kontinuierliche Schaltzustände möglich sein können.

Nach einer vorteilhaften Ausführungsform der Erfindung besitzt die Überwachungseinheit eine Vielzahl von Eingängen, an die eine Vielzahl von Schaltern anschließbar ist. Die Erfindung ist somit nicht auf die Verwendung eines einzigen Schalters beschränkt, sondern es können mehrere Schalter vorgesehen sein, die beispielsweise an unterschiedlichen Orten zur Erzeugung des Schaltsignals vorgesehen sind.

Bevorzugt ist die Überwachungseinheit als berührungslos wirkende Überwachungseinheit, insbesondere als Lichtgitter ausgebildet. Berührungslos wirkende Überwachungseinheiten sind besonders vorteilhaft, da sie in der Regel wartungsfrei arbeiten und beim Eindringen eines Gegenstands in den Überwachungsbereich nicht mechanisch beansprucht werden, wodurch die Wahrscheinlichkeit eines Defekts verringert werden kann. Grundsätzlich ist es jedoch auch möglich, die Überwachungseinheit als mechanisch ansprechende Überwachungseinheit, insbesondere mit einer Trittmatte zum Erfassen von in den Überwachungsbereich eindringenden Objekten, oder auf sonstige geeignete Weise auszubilden.

Nach einer weitere vorteilhaften Ausführungsform der Erfindung umfaßt die Überwachungseinheit ein Sendeelement zum Aussenden eines Sendesignals und ein Empfangssignal, das zum Empfangen des von dem Sendeelement ausgesandten Sendesignals ausgebildet ist, wobei der Ausgang, an dem das Schaltsignal erzeugt wird, an dem Empfangselement vorgesehen ist. Bevorzugt ist der Anschluß dabei als Eingang des Empfangselements ausgebildet.

Durch die Ausbildung des Anschlusses als Eingang des Empfangselements ist eine besonders einfache Ausgestaltung der erfindungsgemäßen Vorrichtung möglich, da auf diese Weise sämtliche Anschlüsse an dem Empfangselement vorgesehen sind (Eingang für den Schalter sowie Ausgang zur Schaltsignalerzeugung). Eine separate Verbindung zwischen dem Sende- und dem Empfangselement ist bei dieser Ausbildung nicht erforderlich.

Nach einer weiteren Ausführungsform der Erfindung ist es jedoch alternativ oder zusätzlich möglich, daß der Anschluß als Eingang des Sendeelements ausgebildet ist und daß das Sendeelement mit dem Empfangselement zur Übertragung von Steuersignalen, insbesondere über eine Busleitung, gekoppelt ist. Diese Ausbildung ist insbesondere dann vorteilhaft, wenn in dem Empfangselement die elektrischen Eingangssignale bereits durch andere Funktionen, wie beispielsweise Schützkontrolle, Befehlsgerät, Lampenausgänge, Schaltausgänge und so weiter belegt sind. Demgegenüber stehen am Sendeelement oft die entsprechenden Signaleingänge, an die der Schalter angeschlossen werden kann, ungenutzt zur Verfügung.

Nach einer weiteren vorteilhaften Ausführungsform der Erfindung ist der Ausgang über eine Busleitung mit einer sicheren Steuerung mit Busanschluß verbunden, über die die zu überwachende Einrichtung ansteuerbar ist. Diese Ausführungsform ist insbesondere dann sinnvoll, wenn das Sendeelement mit dem Empfangselement über eine Busleitung verbunden ist, so daß der Schalter an einem Eingang des Sendeelements angeschlossen werden kann. Grundsätzlich ist diese Ausbildung jedoch auch dann möglich, wenn der Schalter an einem Eingang des Empfangselements oder sowohl ein Schalter an dem Empfangselement als auch ein Schalter an dem Sendeelement angeschlossen sind.

Nach einer weiteren bevorzugten Ausführungsform der Erfindung ist der Anschluß als Multifunktionsanschluß, beispielsweise zum Anschluß einer Restart-Taste, einer Taktsteuerung, eines Betriebsartenwahlschalters, einer Einlerntaste oder zum Betrieb als Schalt- oder Meldeausgang oder als Synchronisationsanschluß für mehrere zusammengeschaltete Überwachungseinheiten ausgebildet. Durch die Verwendung von Multifunktionsanschlüssen ist ein sehr variabler Einsatz einer erfindungsgemäß ausgebildeten Vorrichtung möglich. Die Multifunktionsanschlüsse können durch entsprechende Konfiguration der Überwachungseinheit sowohl als Eingang als auch als Ausgang geschaltet und verwendet werden, so daß je nach Bedarf erfindungsgemäß ein Notausschalter an einem oder mehreren der Multifunktionsanschlüsse angeschlossen werden kann. Dadurch kann die Sicherheit einer entsprechenden Vorrichtung weiter erhöht werden.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher erläutert; in diesen zeigen:
- Fig. 1: eine Überwachungsvorrichtung gemäß dem Stand der Technik
- Fig. 2: eine erste Ausführungsform einer erfindungsgemäß ausgebildeten Überwachungsvorrichtung,
- Fig. 3: eine weitere Überwachungsvorrichtung gemäß dem Stand der Technik und
- Fig. 4: eine weitere Ausführungsform einer erfindungsgemäß ausgebildeten Überwachungsvorrichtung.

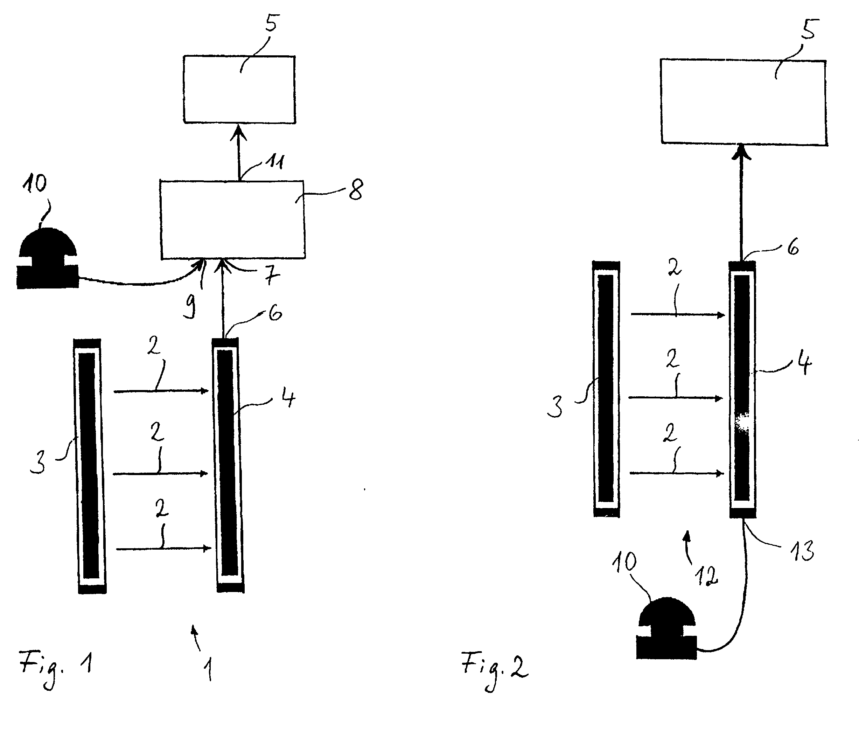

Fig. 1 zeigt eine als Lichtgitter ausgebildete, berührungslos wirkende Überwachungseinheit 1, die ein Lichtstrahlen 2 aussendendes Sendeelement 3 und ein die Lichtstrahlen 2 empfangendes Empfangselement 4 umfaßt. Die Überwachungseinheit 1 ist dabei beispielsweise so angeordnet, daß beispielsweise eine innerhalb eines Schutzbereichs angeordnete, gefahrbringende Einrichtung 5 nur durch Unterbrechen der Lichtstrahlen 2 erreicht werden kann.

Das Empfangselement 4 besitzt einen Ausgang 6, der mit einem Eingang 7 einer sicheren Schalteinheit 8 verbunden ist. Die Schalteinheit 8 kann dabei beispielsweise in Relaistechnik oder als rein elektronische Einheit ausgebildet sein.

Die Schalteinheit 8 besitzt einen weiteren Eingang 9, an den ein Schalter 10 angeschlossen ist, sowie einen Ausgang 11, über den die Einheit 8 mit der zu überwachenden Einrichtung 5 verbunden ist.

Die Funktionsweise dieser Vorrichtung ist wie folgt:

Dringt ein Objekt in den Schutzbereich der Überwachungseinheit 1 ein, so wird zumindest einer der Lichtstrahlen 2 unterbrochen, wodurch das Empfangselement 4 an dem Ausgang 6 ein entsprechendes Steuersignal, beispielsweise in Form eines Abschaltsignals für die Einrichtung 5 erzeugt. Dieses Steuersignal wird über den Eingang 7 an die sichere Schalteinheit 8 übertragen, das das entsprechende Schaltsignal über seinen Ausgang 11 an die Einrichtung 5 weiterleitet. Auf diese Weise wird die Einrichtung 5 beispielsweise abgeschaltet.

Zusätzlich zu der Abschaltung bei Erfassen eines Objekts innerhalb des Schutzbereiches kann die Einrichtung 5 auch dadurch abgeschaltet werden, daß der Schalter 10 betätigt wird, was von der sicheren Schalteinheit über den Eingang 9 erkannt wird. Die Schalteinheit 8 generiert in diesem Fall ein Steuer- bzw. Abschaltsignal für die Einrichtung 5, das dem Steuer- bzw. Abschaltsignal entspricht, welches bei einem Unterbrechen der Lichtstrahlen 2 von dem Empfangselement 4 zu der Einrichtung 5 übertragen wird, und überträgt dieses Signal wiederum über seinen Ausgang 11 zu der Einrichtung 5. Auch in diesem Fall wird somit die Einrichtung 5 beispielsweise abgeschaltet.

In der in Fig. 2 dargestellten erfindungsgemäßen Ausführungsform sind Elemente, die bereits aus Fig. 1 bekannt sind, mit gleichen Bezugszeichen versehen.

Fig. 2 zeigt eine erfindungsgemäß ausgebildete, berührungslos wirkende Überwachungseinheit 12, die als Lichtgitter ausgebildet ist und wie die Überwachungseinheit 1 gemäß Fig. 1 ein Sendeelement 3 zum Aussenden von Lichtstrahlen 2 sowie ein Empfangselement 4 zum Empfangen der ausgesandten Lichtstrahlen 2 umfaßt.

Das Empfangselement 4 besitzt einen als Eingang 13 ausgebildeten Anschluß, an den ein analog zu Fig. 1 vorgesehener Schalter 10 angeschlossen ist.

Der Ausgang 6 des Empfangselements 4 ist unmittelbar mit der zu überwachenden Einrichtung 5 verbunden, so daß die in Fig. 1 vorgesehene sichere Schalteinheit 8 nicht vorhanden ist.

Die in Fig. 2 dargestellte, erfindungsgemäße Vorrichtung arbeitet wie folgt:

Wird zumindest einer der Lichtstrahlen 2 durch ein in den Schutzbereich der Überwachungseinheit 12 eindringendes Objekt unterbrochen, so wird von dem Empfangselement 4 an dem Ausgang 6 ein entsprechendes Steuer- bzw. Abschaltsignal für die Einrichtung 5 erzeugt und an diese übermittelt. Die Einrichtung 5 wird in diesem Fall beispielsweise abgeschaltet.

Wird der Schalter 10 betätigt, so wird ein entsprechendes Signal über den Eingang 13 an das Empfangselement 4 übertragen, woraufhin in diesem dieselben Schaltfunktionen ausgelöst werden, wie es beim Unterbrechen eines der Lichtstrahlen 2 der Fall ist. In diesem Fall wird somit die dem Empfangselement 4 eigene Funktionalität, ein Steuer- bzw. Abschaltsignal zu erzeugen, auch bei der Betätigung des Schalters 10 ausgenutzt, so daß bei Betätigen des Schalters 10 an dem Ausgang 6 des Empfangselements 4 dasselbe Steuer- bzw. Abschaltsignal erzeugt wird, wie es bei Unterbrechen eines Lichtstrahls 2 der Fall ist.

Dieses Steuer- bzw. Abschaltsignal wird in üblicher Weise an die Einrichtung 5 weitergeleitet, so daß diese beispielsweise abgeschaltet wird.

Die erfindungsgemäße Vorrichtung gemäß Fig. 2 kann somit deutlich einfacher aufgebaut werden als die Vorrichtung gemäß Fig. 1, da es nicht erforderlich ist, eine sichere Schalteinheit 8 vorzusehen, die zum einen die zwei Eingänge 7 und 9 auf Vorliegen eines Schaltsignals überprüfen muß und zum anderen beim Betätigen des Schalters 10 ein zu dem Ausgangssignal des Empfangselements 4 konformes Steuer- bzw. Abschaltsignal für die Einrichtung 5 erzeugen muß.

Ist der Eingang 13 als Multifunktionsanschluß ausgebildet, so kann dieser Anschluß für unterschiedliche Funktionen konfiguriert werden. Beispielsweise können anstelle des Anschlusses eines Schalters 10 folgende Funktionen vorgesehen sein: Anschluß eines Befehlsgeräts, Verwendung als sicherer Schaltausgang, Verwendung als sicherer Schalteingang, beispielsweise zur Verkettung von mehreren Überwachungseinheiten, Verwendung von Meldeausgängen, beispielsweise zur Ansteuerung von akustischen oder optischen Signalgebern, Anschluß für Taktsteuerungen von Maschinen, Anschluß von Betriebsartenwahlschaltern zur Auswahl von Schaltfunktionen wie beispielsweise Blankingumschaltung, Eintakt, Zweitakt, Wiederanlaufsperre, an/aus, Anschluß einer Restart-Taste oder eine Einlerntaste oder Verwendung als Synchronsisationsanschluß für mehrere zusammengeschaltete Überwachungseinheiten. Mit der Einlerntaste kann die Überwachungseinheit beispielsweise in einen Lernmodus umgeschaltet werden, in dem z. B. die Form von aus einer Presse herausund in den Schutzbereich hineinragenden Werkstücken eingelernt wird. Das auf diese Weise eingelernte Schutzfeld kann dann in der Überwachungseinheit abgespeichert und nach Zurückschalten der Überwachungseinheit über die Einlerntaste in den Überwachungsmodus verwendet werden.

Sind mehrere Anschlüsse 13 an dem Empfangselement 4 vorgesehen, so können eine oder mehrere der angegebenen Funktionen, insbesondere zusätzlich zu einem Anschluß eines Schalters 10 vorgesehen sein. Weiterhin ist es auch möglich, mehrere Schalter 10 vorzusehen, so daß die Einrichtung 5 beispielsweise von mehreren Orten aus abgeschaltet werden kann.

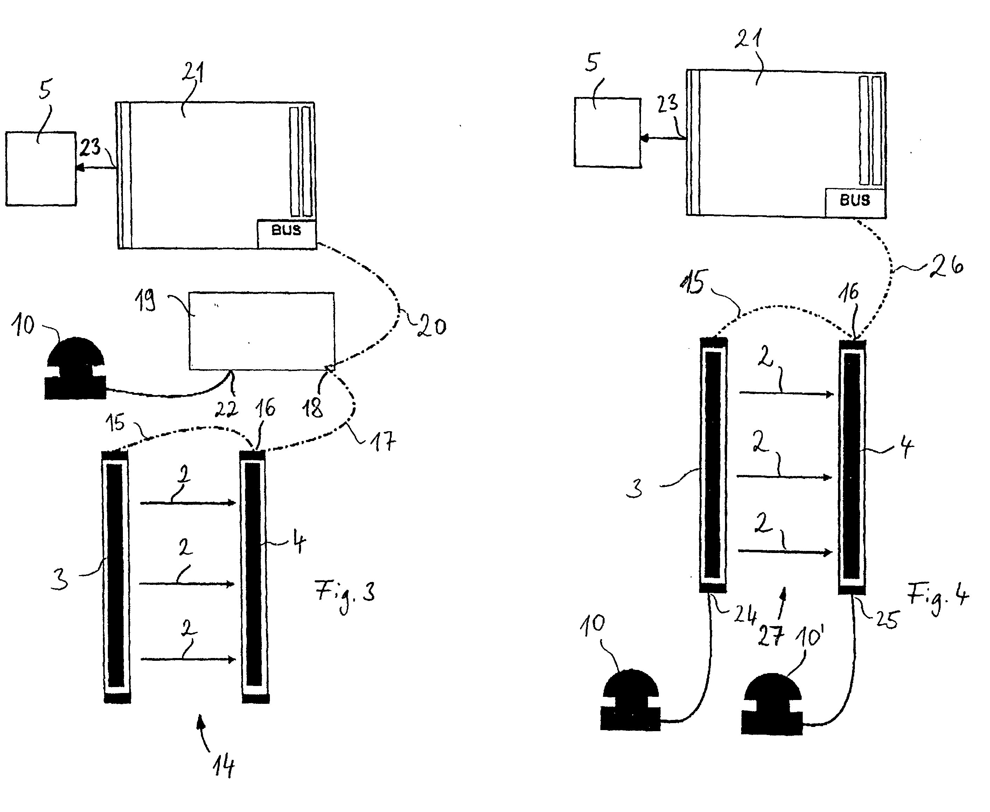

Fig. 3 zeigt eine Überwachungseinheit 14 gemäß dem Stand der Technik, bei der das Sendeelement 3 und das Empfangselement 4 über eine sichere Busleitung 15 miteinander verbunden sind.

Das Empfangselement 4 besitzt dabei einen Busanschluß 16 der sowohl mit der Busleitung 15 als auch mit einer weiteren Busleitung 17 verbunden ist. Die Busleitung 17 ist wiederum mit einem entsprechenden Busanschluß 18 einer sicheren, busfähigen Ein-/Ausgabeeinheit 19 verbunden, die wiederum über eine weitere Busleitung 20 mit einer sicheren Steuerung 21 mit Busanschluß verbunden ist.

Die sichere busfähige Ein-/Ausgabeeinheit 19 besitzt einen Eingang 22 an den ein Schalter 10 angeschlossen ist.

Die sichere Steuerung 21 besitzt einen Ausgang 23, über den sie mit der zu überwachenden Einrichtung 5 verbunden ist.

Das Abschalten bzw. Ansteuern der zu überwachenden Einrichtung bei Eindringen eines Objekts in den Überwachungsbereich bzw. bei Betätigen des Schalters 10 erfolgt analog zu der zu Fig. 1 beschriebenen Funktionsweise.

Wird einer der Lichtstrahlen 2 unterbrochen, so wird von dem Empfangselement 4 an dem Ausgang 16 ein entsprechendes Steuer- bzw. Abschaltsignal erzeugt, das über die Busleitungen 17 und 20 zu der sicheren Steuerung 21 und von dieser über den Ausgang 22 zu der zu überwachenden Einrichtung 5 übertragen wird. Auf diese Weise wird die Einrichtung 5 beispielsweise abgeschaltet.

Wird der Schalter 10 betätigt, so wird an dem Eingang 22 der sicheren busfähigen Ein-/Ausgabeeinheit 19 ein entsprechendes Signal erzeugt, das von dieser ausgewertet wird. Aufgrund dieses Signals wird von der sicheren busfähigen Ein-/Ausgabeeinheit 19 ein Steuer- bzw. Abschaltsignal erzeugt, wie es bei Unterbrechen der Lichtstrahlen 2 von dem Empfangselement 4 erzeugt wird. Dieses Steuer- bzw. Abschaltsignal wird über die Busleitung 20 an die sichere Steuerung 21 weitergeleitet, und führt über den Ausgang 23 letztlich zum Abschalten der Einrichtung 5.

Auch in diesem Fall ist somit wiederum eine separate, sichere busfähige Ein-/Ausgabeeinheit erforderlich, die den Eingang 22 überprüft und bei Anliegen eines Schaltsignals an dem Eingang 22 ein für die sichere Steuerung 21 geeignetes Steuer- bzw. Abschaltsignal erzeugt.

Bei der in Fig. 4 gezeigten erfindungsgemäßen Ausführungsform kann die sichere busfähige Ein-/Ausgabeeinheit 19 entfallen, so daß diese Vorrichtung einfacher und kostengünstiger ausgebildet werden kann als die in Fig. 3 dargestellte Vorrichtung.

In Fig. 4 besitzt sowohl das Sendeelement 3 als auch das Empfangselement 4 einer Überwachungseinheit 27 einen Eingang 24 bzw. 25 an denen jeweils ein Schalter 10, 10' angeschlossen ist. Das Sendeelement 3 ist über eine Busleitung 15 mit einem Busanschluß 16 des Empfangselements verbunden, das wiederum über eine Busleitung 26 direkt mit der sicheren Steuerung 21 verbunden ist. Diese ist wiederum über ihren Ausgang 23 mit der zu überwachenden Einrichtung 5 verbunden.

Vorteilhaft an der erfindungsgemäßen Ausführungsform gemäß Fig. 4 ist zum einen, daß die sichere busfähige Ein-/Ausgabeeinheit 19 entfallen kann, da wiederum die der Überwachungseinheit 27 unmittelbar zu eigene Fähigkeit, ein Steuer- bzw. Abschaltsignal für die sichere Steuerung 21 zu erzeugen, auch bei Betätigen der Schalter 10, 10' genutzt wird.

Durch die Kopplung der Sende- und Empfangselement 3, 4 über die Busleitung 15 ist es dabei möglich, auch an das Sendeelement 3 einen oder mehrere Schalter 10 anzuschließen, da bei Betätigung des Schalters 10 die entsprechenden Schaltsignale über die Busleitung 15 zu dem Empfangselement 4 übertragen werden, woraufhin dieses an dem Busanschluß 16 die erforderlichen Steuer- bzw. Abschaltsignale erzeugt. Da bei dem Empfangselement 4 oftmals alle elektrischen Anschlüsse durch andere Funktionen, wie beispielsweise Schützkontrolle, Befehlsgeräte, Lampenausgänge, Schaltausgänge oder dergleichen belegt sind, am Sendeelement 3 jedoch zumeist entsprechende Anschlüsse nicht belegt sind, ist es oft von Vorteil, diese unbelegten Anschlüsse zum Anschluß der Schalter 10 zu verwenden.

Wie bereits zu Fig. 2 beschrieben, können die Eingänge 24, 25 als Multifunktionsanschlüsse ausgebildet sein und dieselben Funktionen, wie sie zu Fig. 4 beschrieben wurden, realisieren. Weiterhin können ebenfalls sowohl an dem Sendeelement 3 als auch an dem Empfangselement 4 ein oder mehrere Eingänge 24, 25 vorgesehen sein.

### BEZUGSZEICHENLISTE

- 1: Überwachungseinheit
- 2: Lichtstrahlen
- 3: Sendeelement
- 4: Empfangselement
- 5: Einrichtung
- 6: Ausgang
- 7: Eingang
- 8: sichere Schalteinheit
- 9: Eingang
- 10, 10': Schalter
- 11: Ausgang
- 12: Überwachungseinheit
- 13: Eingang
- 14: Überwachungseinheit
- 15: Busleitung
- 16: Busanschluß
- 17: Busleitung
- 18: Busanschluß
- 19: sichere busfähige Ein-/Ausgabeeinheit
- 20: Busleitung
- 21: sichere Steuerung mit Busanschluß
- 22: Eingang
- 23: Ausgang
- 24: Eingang
- 25: Eingang
- 26: Busleitung
- 27: Überwachungseinheit

## Patentansprüche

1. Vorrichtung zum Überwachen eines Schutzbereichs mit einer Überwachungseinheit (12, 27) zum Erfassen eines in den Schutzbereich eindringenden Objekts, wobei die Überwachungseinheit (12, 27) zumindest einen Ausgang (6, 16) besitzt, an dem bei Eindringen eines Objekts in den Schutzbereich ein Steuersignal zum Ansteuern einer zu überwachenden Einrichtung (5), insbesondere ein Schaltsignal zum Abschalten der Einrichtung (5), erzeugbar ist, und mit zumindest einem Anschluß für einen Schalter (10, 10'), insbesondere für einen Notausschalter, durch den die Einrichtung (5) zusätzlich ansteuerbar, insbesondere abschaltbar ist,
**dadurch gekennzeichnet,**
**daß** der Anschluß als Eingang (13, 24, 25) der Überwachungseinheit (12, 27) ausgebildet ist und daß durch Betätigen eines an den Eingang (13, 24, 25) angeschlossenen Schalters (10, 10') an dem Ausgang (6, 16) der Überwachungseinheit (12, 27) das Steuersignal für die zu überwachende Einrichtung (5) erzeugbar ist.

2. Vorrichtung nach Anspruch 1,
**dadurch gekennzeichnet,**
**daß** die Überwachungseinheit (12, 27) eine Vielzahl von Eingängen (13, 24, 25) besitzt, an die eine Vielzahl von Schaltern (10, 10') anschließbar ist.

3. Vorrichtung nach Anspruch 1 oder 2,
**dadurch gekennzeichnet,**
**daß** die Überwachungseinheit (12, 27) als berührungslos wirkende Überwachungseinheit, insbesondere als Lichtgitter ausgebildet ist.

4. Vorrichtung nach einem der vorhergehenden Ansprüche,
**dadurch gekennzeichnet,**
**daß** die Überwachungseinheit (12, 27) ein Sendeelement (3) zum Aussenden eines Sendesignals (2) und ein Empfangselement (4), das zum Empfangen des von dem Sendeelement (3) ausgesandten Sendesignals (2) ausgebildet ist, umfaßt und daß der Ausgang (6, 16) an dem Empfangselement (4) vorgesehen ist.

5. Vorrichtung nach Anspruch 4,
**dadurch gekennzeichnet,**
**daß** der Anschluß als Eingang (13, 25) des Empfangselements (4) ausgebildet ist.

6. Vorrichtung nach Anspruch 4 oder 5,
**dadurch gekennzeichnet,**
**daß** der Anschluß als Eingang (24) des Sendeelements (3) ausgebildet ist und daß das Sendeelement (3) mit dem Empfangselement (4) zur Übertragung von Steuersignalen, insbesondere über eine Busleitung (15), gekoppelt ist.

7. Vorrichtung nach Anspruch 1 oder 2,
**dadurch gekenn*z*eichnet,**
daß die Überwachungseinheit als mechanisch ansprechende Überwachungseinheit, insbesondere mit einer Trittmatte zum Erfassen von in den Überwachungsbereich eindringenden Objekten ausgebildet ist.

8. Vorrichtung nach einem der vorhergehenden Ansprüche,
**dadurch gekennzeichnet,**
**daß** der Ausgang (6, 16) über eine Busleitung (27) mit einer sicheren Steuerung (21) mit Busanschluß verbunden ist, über die die zu überwachende Einrichtung (5) ansteuerbar ist.

9. Vorrichtung nach einem der vorhergehenden Ansprüche,
**dadurch gekennzeichnet,**
**daß** der Anschluß als Multifunktionsanschluß, beispielsweise zum Anschluß einer Restart-Taste, einer Taktsteuerung, eines Betriebsartenwahlschalters, einer Einlerntaste oder zum Betrieb als Schaltoder Meldeausgang oder als Synchronisationsanschluß für mehrere zusammengeschaltete Überwachungseinheiten, ausgebildet ist.

## Claims

1. An apparatus for monitoring a protected zone comprising a monitoring unit (12, 27) to detect an object intruding into the protected zone, with the monitoring unit (12, 27) having at least one output (6, 16) at which a control signal can be produced to control a device (5) to be monitored, in particular a switch signal to switch off the device (5), when an object intrudes into the protected zone, and comprising at least one connection for a switch (10, 10'), in particular for an emergency off switch, by which the device (5) can be additionally controlled, in particular switched off,
**characterised in that** the connection is designed as an input (13, 24, 25) of the monitoring unit (12, 27); and **in that**, by actuating a switch (10, 10') connected to the input (13, 24, 25), the control signal for the device (5) to be monitored can be produced at the output (6, 16) of the monitoring unit (12, 27).

2. An apparatus in accordance with claim 1, **characterized in that** the monitoring unit (12, 27) has a plurality of inputs (13, 24, 25) to which a plurality of switches (10, 10') can be connected.

3. An apparatus in accordance with claim 1 or claim 2, **characterized in that** the monitoring unit (12, 27) is designed as a monitoring unit working in a contact free manner, in particular as a light grid.

4. An apparatus in accordance with any one of the preceding claims, **characterized in that** the monitoring unit (12, 27) includes a transmitter element (3) to transmit a transmitted signal (2) and a receiver element (4), which is designed to receive the transmitted signal (2) transmitted by the transmitter element (3); and **in that** the output (6, 16) is provided at the receiver element (4).

5. An apparatus in accordance with claim 4, **characterised in that** the connection is designed as an input (13, 25) of the receiver element (4).

6. An apparatus in accordance with claim 4 or claim 5, **characterised in that** the connection is designed as an input (24) of the transmitter element (3); and **in that** the transmitter element (3) is coupled with the receiver element (4), in particular via a bus line (15), for the transmission of control signals.

7. An apparatus in accordance with claim 1 or claim 2, **characterised in that** the monitoring unit is designed as a mechanically responding monitoring unit, in particular with a tread mat to detect objects intruding into the monitored zone.

8. An apparatus in accordance with any one of the preceding claims, **characterized in that** the output (6, 16) is connected via a bus line (27) to a secure control (21) with a bus connector, via which control the device (5) to be monitored is controllable.

9. An apparatus in accordance with any one of the preceding claims, **characterized in that** the connection is designed as a multi-function connection, for example for the connection of a restart button, of a cycle control, of a mode selection switch, of a learning key, or for operation as a switch or report output or as a synchronisation connection for a plurality of interconnected monitoring units.

## Revendications

1. Dispositif pour surveiller une zone protégée, comportant une unité de surveillance (12, 27) pour détecter un objet pénétrant dans la zone protégée, l'unité de surveillance (12, 27) possédant au moins une sortie (6, 16) à laquelle un signal de commande peut être émis, lorsqu'un objet pénètre dans la zone protégée, pour piloter une installation à surveiller (5), en particulier un signal de commutation pour couper l'installation (5), et comportant au moins un raccordement pour un interrupteur (10, 10'), en particulier un disjoncteur de secours par lequel l'installation (5) peut être pilotée en supplément, en particulier être coupée, **caractérisé en ce que** le raccordement est réalisé sous forme d'entrée (13, 24, 25) de l'unité de surveillance (12, 27) et **en ce que** par actionnement d'un interrupteur (10, 10') branché à l'entrée (13, 24, 25) le signal de commande pour l'installation à surveiller (5) peut être émis à la sortie (6, 16) de l'unité de surveillance (12, 27).

2. Dispositif selon la revendication 1, **caractérisé en ce que** l'unité de surveillance (12, 27) possède une multitude d'entrées (13, 24, 25) auxquelles peuvent être branchés une multitude d'interrupteurs (10, 10').

3. Dispositif selon l'une ou l'autre des revendications 1 ou 2, **caractérisé en ce que** l'unité de surveillance (12, 27) est réalisée sous forme d'unité de surveillance agissant sans contact, en particulier sous forme de grille lumineuse.

4. Dispositif selon l'une des revendications précédentes, **caractérisé en ce que** l'unité de surveillance (12, 27) comprend un élément émetteur (3) pour émettre un signal d'émission (2) et un élément récepteur (4) réalisé pour recevoir le signal d'émission (2) émis par l'élément émetteur (3), et **en ce que** la sortie (6, 16) est prévue sur l'élément récepteur (4).

5. Dispositif selon la revendication 4, **caractérisé en ce que** le raccordement est réalisé sous forme d'entrée (13, 25) de l'élément récepteur (4).

6. Dispositif selon l'une ou l'autre des revendications 4 et 5, **caractérisé en ce que** le raccordement est réalisé sous forme d'entrée (24) de l'élément émetteur (3), et **en ce que** l'élément émetteur (3) est couplé à l'élément récepteur (4) pour transmettre des signaux de commande, en particulier via une ligne de bus (15).

7. Dispositif selon l'une ou l'autre des revendications 1 et 2, **caractérisé en ce que** l'unité de surveillance est réalisée sous forme d'unité de surveillance à réponse mécanique, en particulier avec un tapis-trottoir pour détecter des objets pénétrant dans la zone à surveiller.

8. Dispositif selon l'une des revendications précédentes, **caractérisé en ce que** la sortie (6, 16) est connectée via une ligne de bus (27) à une commande de sécurité (21) qui comporte un raccordement de bus et via laquelle peut être pilotée l'installation à surveiller (5).

9. Dispositif selon l'une des revendications précédentes, **caractérisé en ce que** le raccordement est réalisé sous forme de raccordement multi-fonctionnel, par exemple pour brancher une touche de redémarrage, une commande de cycle, un commutateur de sélection de mode de fonctionnement, une touche d'apprentissage, ou pour le fonctionnement sous forme de sortie de commutation ou de signalisation ou encore sous forme de raccordement de synchronisation pour plusieurs unités de surveillance branchées ensemble.
